# EUROPEAN PATENT APPLICATION

(11) **EP 1 544 705 A1**
(43) Date of publication of application: **22.06.2005**
(21) Application number: 03293101.6
(22) Date of filing: 10.12.2003
(51) Int. Cl.: G06F 1/00

(54) **Method for software protection**

(71) Applicant: ALCATEL, 75008 Paris (FR)
(72) Inventor: Wajda, Wieslawa, Dipl-Ing., 75210 Keltern (DE)
(74) Representative: Zinsinger, Norbert

(57) **Abstract**

The invention concerns a method for protecting a software application (11, 31, 32, 33, 34) from unauthorized use as well as an operating system and a computer program product for executing this method. A software key (13, 21) comprising software license data is stored in a protected and encrypted software key data base (42) managed and administrated by an operating system (4) of a computer (3). A verification procedure is performed for the software application (11, 31, 32, 33, 34, 35). The verification procedure checks whether a correspondent software key (13) associated with a software application stored in the software key data base (43) of the operating system (4). The execution of the software application or its specific functions (11, 31, 32, 33, 34, 35) is blocked, if the check is negative.

## Description

The invention relates to a method of protecting a software application from unauthorized use as well as a computer system with an operating system and a computer program product for supporting the execution of this method.

Software protection systems are in wide use today. The purpose of software protection is to prevent the duplication and use of an application program without the purchase or payment of a fee.

A first category of software protection systems includes software protection systems that use software protection routines linked in within the software application itself.

A further category of software protection systems requires additional hardware which probably would not be economical viable for low-cost software products. Further, such hardware normally blocks a serial or parallel interface slot of the computer.

Further, floating licenses bound to a licensing server are known, wherein the software is installed in the licensing server and users anywhere in the network may run it simultaneously up to the licensed number of copies. This approach requests permanent connections between the licensing server and the computers of the users, as long as the software is used.

It is the object of the present invention to provide an improved software protection system which prevents an unauthorized use of a software application.

The object of the present invention is achieved by a method of protecting a software application from unauthorized use, the method comprises the steps of: storing a software key in a protected an encrypted software key data base managed and administrated by an operating system of a computer; performing for the software application a verification procedure checking whether a correspondent software key associated with the software application is stored in the software key data base of the operating system; and blocking the execution of the software application if the check is negative. The object of the present invention is further achieved by a computer program product adapted to perform this method when executed by a computer. The object of the invention is further achieved by a computer with an operating system, the operating system comprises a license control unit adapted to store software keys in a protected and encrypted software key data base managed and administrated by the license control unit, to perform for software applications a verification procedure checking whether a correspondent software key associated with the respective software application stored in the software key database of the operating system; and to block the execution of the respective software application, if the check is negative.

The invention ensures a higher level of protection against unauthorized use of software applications combined with a high degree of user friendliness and inexpensive implementation costs. It is not necessary to provide or install additional hardware on the computer. Further, the use of a licensed software application is no longer bound to a specific storage medium, hardware or computer. It becomes possible to prevent unauthorized use of the licensed software but not bind the user on a specific piece of hardware. The licensed software application can be installed in any computer but can only be run once at the same time (in connection with a one person license or one device license). Further, it is not necessary to have a permanent connection between a computer and a licensing server as it is compulsory in case of a floating licensing.

Further advantages are achieved by the embodiments of the invention indicated by the dependent claims.

Beside a pure check whether a correspondent software key associated with the respective software application is stored in the software key data base, it is further possible that the operating system checks whether the execution of the software application meets the license restriction specified by software license data of the software key. For example, software license data specify data about the licensing, configuration of the licensed software, restricted area of execution, update possibilities and other constraints and limitations, as operating system type or category or number of computers or users which can run the software application in parallel. Such further functionality enables the better adaption of the granted license to the needs of the licensor and licensee.

Following approach may be used to improve the security and safety of the software protection system: A computer specific encryption key is used to encrypt and decrypt the data of the software license data base. Such computer specific encryption key can, for example, be established base on the specific hardware and/or software components of the specific computer. This makes it impossible to use the software key data base outside of the specific computer which is entitled to administrate and manage this software key data base.

According to a preferred embodiment of the invention, the software key is added to the software key data base from a R/W storage medium storing the software application and the correspondent software key, wherein the software key stored on this R/W storage medium is deleted or blocked after transference and successful storage of the software key in the software key data base. Alternatively, it is possible to transmit the software key through a cable or wireless communication system.

Preferably, the operating system comprises additional funcitonalities to administrate, display and transfer the software keys stored in the software key data base in an active way. For example, the operating system provides a further functionality for transferring software keys from the software key data base of the computer to a R/W storage medium and/or preparing a R/W storage medium for the transference of such software key. After transfer and successful storage of the software key in the R/W storage medium, the operating system blocks or deletes the software key stored in the software key data base. Such kind of functionalities makes it possible to easily transfer a software key from one computer to another.

Further, it is possible that software keys are administrated by a community of several computers having specific functionlities for exchanging software keys and "sharing" a software license.

Each of these computers has a protected an encrypted software key data base which is administrated by the operating system of the respective computer. A software key is transmitted from the software key data base of a source computer to a software key data base of a destination computer. The software application may be installed on both, the source computer and the destination computer after transference of the software key. After transference of the software key, the operating system of the source computer locks the software key in its software key data base. In the following, the destination computer is in a position to execute the software application, wherein the source computer blocks any attempts to execute this software application. Further, procedures may be implemented in the system which allocates a software key within such system of interconnected computers and which requests the transference of such software key from a source computer to a requesting destination computer.

A powerful, user-friendly and efficient software protection system is provided by such kind of functionalities.

These as well as other features and advantages of the invention will be better appreciated by reading the following detailed description of presently preferred exemplary embodiments taken in conjunction with accompanying drawings of which:
- Fig. 1: is a block diagram showing a software license protection system with a computer according to the present invention.
- Fig. 2: is a block diagram of a software license protection system with several computers according to a further embodiment of the present invention.

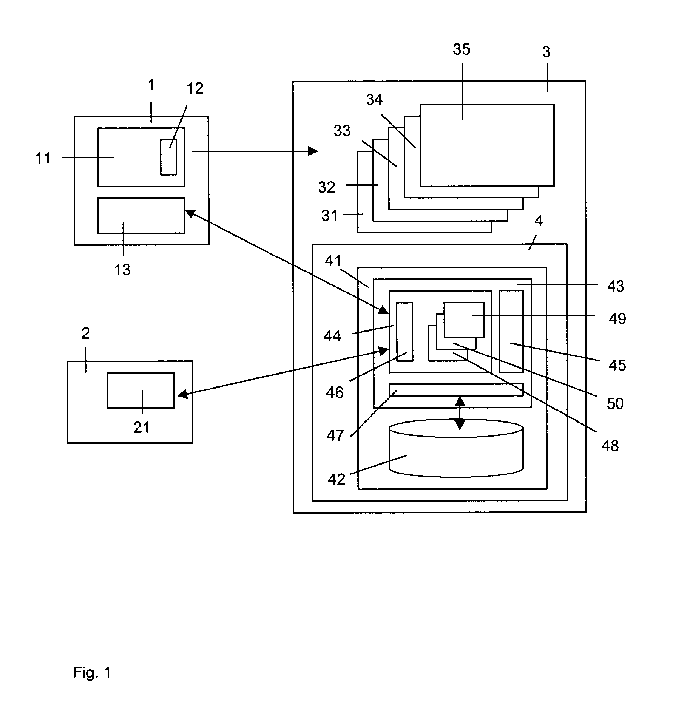

Fig. 1 shows a computer 3 and two storage media 1 and 2.

The storage media 1 and 2 are R/W storage media, for example a floppy disc CD R/W, DVD R/W, a memory stick or a removable hard disc. A software application 11 and a software key 13 are stored in the storage medium 1. Further, a software key 21 is stored in the storage medium 2.

The computer 3 is formed by a hardware platform, a software platform comprising an operating system 4, and several application programs 31, 32, 33, 34 and 35 executed by the system platform established by the aforementioned hardware and software platform.

The operating system 4 provides the well-known functionalities of an operating system, for example task and resource management, interprocess communication and processor scheduling. Beside such functionalities, the operating system 4 provides a new set of functionalities that support the control of software licenses. Fig. 1 shows a license control unit 41 which represents the provisioning of such kinds of functionalities by the operating system 4.

From functional point of view, the license control unit 41 comprises a control unit 43 and a software key data base 42. The control unit 43 has a key administration unit 44, a software blocking unit 45 and a data base access unit 47.

The software key data base 42 is a protected and encrypted data base managed and administrated by the operating system 4. Preferably, the operating system 4 protects the data base 42 by limiting access to the data of the software key data base 42. For example, the data of the database 42 are stored in a memory area which is reserved for operating system functionalities only. Any attempt of software applications to access these data is blocked by the operating system 4. But, it is also possible to protect the software key data base 42 by storing the data of the data base at an memory location within the storage system of the computer 3 unknown for software applications running on the computer 3.

Further, it is possible to protect the software key database 42 by encrypting the data of the data base, so it becomes impossible for software applications to decrypt the data of the data base 42.

The data of the data base 42 is encrypted by means of an encryption key. The data base access unit 47 handles the encryption and decryption of the data of the data base 42.

Preferably, the access unit 47 generates a computer specific encryption key or a computer specific pair of encryption and decryption keys during installation of the operating system 4 on the computer 3. The access unit 47 establishes the encryption key by help of hardware characteristics of the computer 3, for example CPU number (CPU = Central Processing Unit) and available identification numbers of other primary hardware resources of the computer 3. Further, it is possible that the access unit 47 establishes these keys by help of a random process which guarantees the generation of a unique pair of encryption and decryption keys during the installation of the operating system 4.

Further, it is possible that the access unit 47 computes a decryption key for each read access to the software key data base 42. Hardware characteristics of the computers system 3 as well as data generated during the installation of the operating system 4 are used as input data for this computation. Each change of the hardware characteristic would make it impossible to decrypt the data of the data base 42. Even if the whole data and the operating system of the computer 3 is copied to another computer, it becomes impossible to access the data stored in the software key data base 42.

The software key data base 42 holds a set of software keys associated with application programs installed on the computer 3. For example, the software key data base 42 stores five software keys wherein each of these software keys is associated with one of the application programs 31, 32, 33, 34 and 35.

Each of these software keys comprises software license data specifying license conditions and, optionally, a software key identification number and a signed encryption key.

Software license data are, for example, data about licensing constraints and limitations, for example the number of computers or users authorized to execute the software application in parallel, operating system type or category of operating system the license is restricted to, identification of the licensee, restrictions concerning user groups and/or computer groups, restrictions concerning the area or location of execution of the software application, update possibilities, and configuration of the licensed software.

The access unit 47 provides a set of functionalities to the software key management unit 44 and the blocking unit 45. For example, it provides a software key read, write, destruct and block functionality on the software key data base 42. When providing these functionalities, it takes care on the date decryption and encryption of software keys as well as on the data structure used for organizing the data of the software key data base 42. Thereby, it manages and administrates the software keys of the software key data base 42.

The blocking unit 45 checks whether execution of a software application complies with the software license condition and blocks the execution of the software if it detects any break of licensing conditions.

The blocking unit 45 performs for each software application that should be executed on the computer 3 a verification procedure checking whether a correspondent software key associated with this software application is stored in the software key data base 42 of the operating system 4. For example, it reads a software application identifier or a software key identifier assigned to an application program, stored in the header of a software application or submitted, on request, from the software application to the blocking unit 45. By help of these data and the access unit 47, it retrieves the correspondent software key associated with the respective software application. If it is not possible to retrieve a correspondent software key, it blocks the execution of the software application.

If it retrieves a correspondent software key associated with said software application, it checks whether the execution of the software application meets the license restriction specified by the license data of the software key. It checks, whether the computer, the user of the computer, and the location area of the computer fits with the license restriction specified by the license data. Further, it may check the number of instances of the application as a kind of restriction. Also, time of use or number of created objects may be restricted by the software key (software leasing). For example, there exists a restriction concerning the number of objects (e.g. documents) that are created by means of the software application (e.g. a text processing application). For determining the location of the computer 3, it may access a GPS unit (GPS = Global Positioning System) or other kind of localization service connected with the computer 3 or integrated in the computer 3. If this check of license restrictions is negative, it blocks the execution of the software application.

For example, the operating system 4 blocks the execution of a software application by blocking the granting of processor time to the respective software application. But, it is also possible that the blocking unit 45 replies a specific command message back to the respective software application, the command message indicates to the software application that the execution of the software application does not meet the licensing restrictions associated with the software application. Further, it is also possible that the blocking unit 45 does not send an acknowledgment message back to the software application which acknowledges the compliance with software licensing restrictions. In the following, the software application itself stops further provisioning of services.

The verification procedure may be executed each time a user requests the execution of a software application. Further, it is possible that the blocking unit 45 executes the verification procedure on a regular or random basis for each of the software applications installed on the computer 3.

The key management unit 44 provides various possibilities to administrate and transfer software keys stored in the software key data base 42. For example, it displays the number and specification of available software keys to the user, and provides a set of functionalities to the user enabling the user to add keys, delete keys and transfer keys to other computers or external storage media.

From functional point of view, the key management unit 44 comprises a software key encryption and decryption unit 46, a add key unit 48, a prepare media unit 50 and a move key unit 49.

The add key unit 48 provides a set of functionalities for adding a software key from an external storage medium or an external computer to the software key data base 42 of the computer 3.

For example, the key 13 stored on the storage media 1 has to be transferred to the software key data base 42 of the computer 3.

The add key unit 48 accesses the storage medium 1 via the key encryption/decryption unit 46. It reads the software key 13 and stores the software key 13 through the access unit 47 in the software key data base 42. After transference and successful storage of the software key 13 in the software key data base 42, it deletes or blocks the software key 13 stored on the storage medium 1. For example, it deletes the whole or a part of the data of the storage media 1 that corresponds to the software key 13, and thereby destructs the software key 13. Further, it may amend software license data of the software key 13 stored on the storage medium 1 that indicates the blocking of the stored software key or the decrease of the numbers of software license represented by the stored software key. The add key unit 48 enables the use of the new software key stored in the software key data base 42, after it has successfully deleted or blocked the correspondent software key primarily stored on the storage medium 1.

In parallel, the user initiates the installation of the software application 11 on the computer 3. After successful installation of the software application 11 and after successful transference of the software key 13 from the storage media 1 to the software key data base 42, the user is in a position to start the execution of the software application 11. The blocking unit 45 accesses the application identifier 12 during the verification procedure and retrieves by help of this information the transferred software key 13.

The prepare medium unit 50 provides a set of functionalities to the user of the computer 3 that prepares a storage medium unit for carrying a software key. The prepare medium unit 50 performs the following functionalities to prepare the storage medium 2 for carrying the software key 21:

The prepare medium unit 50 stores identification data on the storage medium 2. These identification data contains information about the operating system that should receive the software key and identifies this operating system. Further, it stores a public key of this destination operating system, the public key represents the encryption key used by the encryption and decryption unit 46 for encrypting the software key which should later on be stored on the storage media 2.

The move key unit 49 provides functionalities to transfer the software key 21 from the software key data base 42 to the storage medium 2. The move key unit 49 reads the software key 21 through the access unit 47 and accesses the storage media through the encryption and decryption unit 46. The encryption and decryption unit 46 encrypts the software key 21 with an encryption key assigned to the destination operating system. Then, the software key 21 is stored in such encrypted form on the storage medium 2. After the move key unit 49 has successfully handled the transfer of the software key 21 and the storage of the software key 21 (in encrypted form), the move key unit 49 blocks or deletes the software key 21 stored in the software key data base 42.

The user is now in a position to take the storage medium 2, to connect the storage medium 2 to another computer comprising an operating system similar to the operating system 4, and to initiate the transfer of the software key 21 to the software key data base of this computer by using the add key unit of the operating system of this computer.

Further, it is also possible that the storage media 1 and 2 are storage media's integrated in a computer communicating with the computer 3 via a communication network. For example, the storage medium 1 is a storage system of a server provided by the supplier of the software application 1 to distribute software applications and software keys. For example, the storage medium 2 is the storage system of a computer equipped as the computer 3.

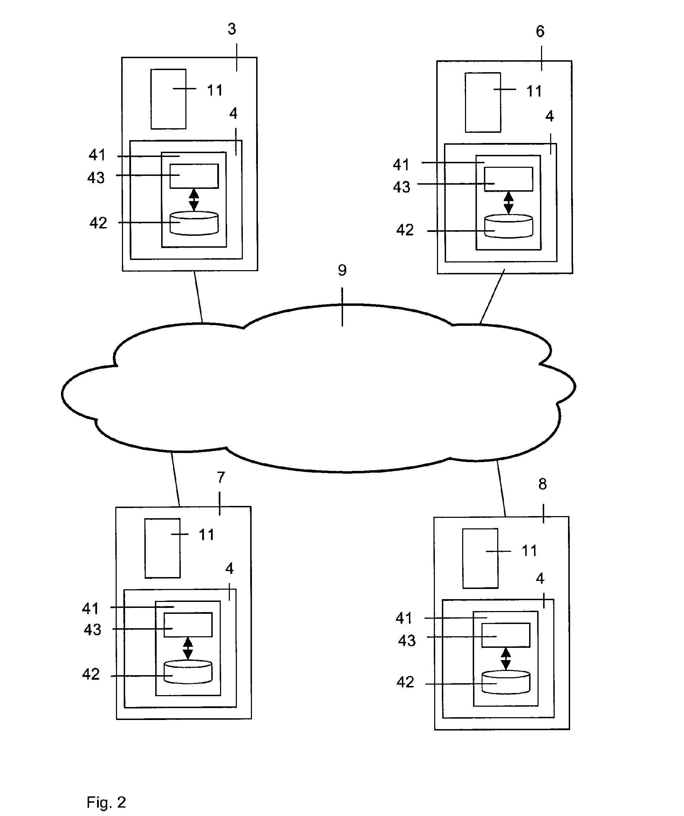

Further embodiments of the invention are discussed by help of Fig. 2 which shows the computer 3 and several further computers 6, 7 and 8 connected with the computer 3 via a communication network 9.

The communication network 9 is a communication network that enables the exchange of data between the computers 3, 6, 7 and 8. For example, the communication network 9 is an IP network (IP = Internet Protocol). Such communication network may be constituted by a plurality of physical networks, for example Ethernet, ATM or MPLS networks (ATM = Asynchroune Transfer Mode, MPLS = Multiprotocol Label Switching) interlinked via a common level 3 IP protocol.

Each of the computers 3, 6, 7 and 8 comprise the operating system 4 with the license control unit 41, the control unit 43 and the software key data base 42 according to the teaching of Fig. 1. Further, the software application 11 is installed on each of the computers 3, 6, 7 and 8.

For example, the software key data base 42 holds the software key 13 which is the correspondent software key associated with the software application 11. None of the other software key data bases of the computer 6, 7 and 8 holds the software key 13. Consequently, the software application 13 can only be executed on the computer 3.

To transfer the software license to another one of the computers 3, 6, 7 and 8, the user of the computer 3 initiates following procedure:

The user accesses a functionality of the move key unit 49 enabling the transfer of a software key stored in the software key data base 42 of the computer 3 to another computer connected with the computer 3 via the communication network. For example, the user selects the computer 8 as destination computer for such transfer process. The move key unit 49 reads the software key 13 through the access unit 47 and contacts the add key unit of the computer 8 through the encryption and decryption units of the computers 3 and 8. The add key unit of the computer 8 adds the received software key to the software key data base 42 of the computer 8. After successful storage of the software key in the software key data base, the add key unit of the computer 3 transmits an acknowledgement message back to the move key unit of the computer 3. This message quits the successful storage of the transferred software key in the software key data base of the destination computer 8. On receipt of this message, the move key unit 49 of the computer 3, locks, blocks or deletes the software key 13 in the software key data base 42 of the computer 3.

In the following, it is no longer possible to execute the software application 11 on the computer 3, but it is now possible to execute the software application 11 on the computer 8.

Further, it is possible that the key management unit 44 comprises an additional software key request unit making it possible for the user to request software keys from other computers of a user group.

## Claims

1. A method for protecting a software application (11, 31, 32, 33, 34, 35) from unauthorized use,
**characterized in**
**that** the method comprises the steps of:
storing a software key (13) in a protected and encrypted software key data base (42) managed and administrated by an operating system (4) of a computer (3, 6, 7, 8);
performing for the software application (11, 31, 32, 33, 34, 35) a verification procedure checking whether a correspondent software key (13) associated with the software application is stored in the software key data base (42) of the operating system (4); and
blocking the execution of the software application (11, 31, 32, 33, 34, 35) or its specific features, if the check is negative.

2. The method of claim 1,
**characterized in**
**that** the method comprises the further steps of: checking whether the execution of the software application (11, 31, 32, 33, 34, 35) meets the license restriction specified by software license data of the software key (13); and blocking the execution of the software application (11, 31, 32, 33, 34, 35) or its specific features, if the check is negative.

3. The method of claim 1,
**characterized in**
**that** the method comprises the further step of using a computer specific encryption key for encrypting and decrypting the software license data base (42).

4. The method of claim 1,
**characterized in**
**that** the method comprises the further steps of: adding a software key (13) to said software key data base (42) from a R/W storage medium (1) storing the software application and the correspondent software key; and deleting or blocking the software key (13) stored on said R/W storage medium (1) after transference and successful storage of the software key (13) in said software key data base (42).

5. The method of claim 1,
**characterized in**
**that** the method comprises the further steps of: transferring a software key (21) from said software key data base (42) to a R/W storage medium (2); and blocking or deleting the software key stored in said software key data base (42) after transference and successful storage of the software key (21) in said R/W storage medium (2).

6. The method of claim 5,
**characterized in**
**that** the method comprises the further steps of encrypting the software key (21) with an encryption key assigned to the destination operating system and storing the software key (21) in such encrypted form on said R/W storage medium (2).

7. The method of claim 1,
**characterized in**
**that** the method comprises the step of transferring the software key from the software key data base (42) of a source computer (3) to a software key data base (42) of a destination computer (6, 7, 8).

8. The method of claim 7,
**characterized in**
**that** the method comprises the further steps of: installing the software application (11) on both, the source computer (3) and the destination computer (7, 8); and locking the software key at the software key data base (42) of the source computer (3) after transference of the software key.

9. A computer (3, 6, 7, 8) with an operating system (4)
**characterized in**
**that** the operating system (4) comprises a license control unit (4) adapted to store software keys (13) in a protected and encrypted software key data base (42) managed and administrated by the license control unit (41), to perform for software applications (11, 31, 32, 33, 34, 35) a verification procedure checking whether a correspondent software key (13) associated with the respective software application is stored in the software key data base (42) of the operating system (4), and to block the execution of the respective software application (11, 31, 32, 33, 34), if the check is negative.

10. A computer program product (4),
**characterized in**
**that** the computer program product (4) is adapted to perform, when executed by a computer, the steps of: storing a software key (13) in a protected and encrypted software key data base (42) managed and administrated by an operating system of the computer (3, 6, 7, 8); performing for a software application (11, 31, 32, 33, 34) a verification procedure checking whether a correspondent software key (13) associated with the software application is stored in the software key data base (42) of the operating system (4); and blocking the execution of the software application or its specific functions (11, 31, 32, 33, 34, 35), if the check is negative.
